# EUROPEAN PATENT APPLICATION

(11) **EP 2 906 017 A1**
(43) Date of publication of application: **12.08.2015**
(21) Application number: 13844274.4
(22) Date of filing: 01.10.2013
(51) Int. Cl.: H04W 88/08, H04W 12/06, H04W 52/00, H04W 84/12

(54) **RADIO TRANSMISSION APPARATUS AND RADIO TRANSMISSION SYSTEM**

(30) Priority: 03.10.2012 JP 2012220998
(71) Applicant: NEC Corporation, Tokyo 108-8001 (JP)
(72) Inventor: ITOU, Takuya, Tokyo 108-8001 (JP)
(74) Representative: Glawe, Delfs, Moll
(86) International application number: PCT/JP2013/005842
(87) International publication number: WO 2014/054272

(57) **Abstract**

A radio transmission apparatus includes: a radio transmission circuit that performs radio communications; a radio LAN circuit that performs radio LAN communications; a router circuit that processes and transmits data the radio transmission circuit is to supply/receive to/from the radio LAN circuit; power feeding ports for feeding terminals having radio communication functions; a security information storage unit that stores security information; and a control unit. The control unit permits a radio LAN communication by use of a first security mode related to a standardized security authentication and further feeds, from a power feeding port, an authenticated terminal by use of a second security mode related to the connection between the terminal and the power feeding port.

## Description

### [Technical Field]

The present invention relates to a radio transmission apparatus connected to a terminal having a radio communication function so that a radio communications is possible and capable of supplying power to the terminal, and a radio transmission system including the radio transmission apparatus.

### [Background Art]

In recent years, various devices, such as a computer, a mobile phone and a smartphone, can access the Internet utilizing radio LAN (LAN: Local Area Network). In general, in the Internet access according to the radio LAN, communication is performed through an access point. An area in which the Internet access is available by the access point is called a hot spot. Such a hot spot can be formed not only in a local space such as an individual room or a coffee shop but in a space that has an expanse of extending to several kilometers square with a plurality of access points overlapped with each other.

PTL 1 discloses an access point 110 provided with a USB port 142 (USB: Universal Serial Bus) (Fig. 11). The access point 110 of PTL 1 is provided with: a network connection unit including an RF device 116 (RF: Radio Frequency), an antenna 117, an Ethernet controller 115 (Ethernet: registered trademark), a LAN port 152, a WAN port 153 (WAN: Wide Area Network) and a USB host controller 114; and a USB port 142 connecting a USB device. The access point 110 of PTL 1 is provided with a feed control unit 118 controlling power feeding to a USB device from the USB port 142 on the basis of a connection state between a network and the network connection unit, a CPU 111 (CPU: Central Processing Unit) controlling entire access point 110, a ROM112 (ROM: Read Only Memory) and a RAM113 (RAM: Random Access Memory).

The feed control unit 118 of PTL 1 controls the power feeding to the USB device in response to a communication connection condition between a network and the network connection unit.

### [Citation List]

### [Patent Literature]

[PTL 1] Japanese Laid-open Patent Publication No. 2011-82677

### [Summary of Invention]

### [Technical Problem]

In a general radio LAN environment, such a case is assumed that a communication with an external network becomes unavailable due to a damage of a base station itself or a fiber disconnection which results in a physical disconnection of a wired transmission network between the base station and an exchange station at the time of a seismic disaster or the like. Moreover, in a remote place where a wired transmission network has not been constructed, it is also assumed that a network transmission network is required at short notice. Further, when many terminal users gather at the same place or accesses are concentrated at the concert or at the event on a year-end and New Year holidays or the like, it becomes difficult to handle traffic only by common communication equipment. In such cases, it is required to temporarily construct a transmission line to construct a communication channel of about several hundreds of Mbps, but there has been a problem that considerable time and cost are required to establish such network through a wired transmission network.

In addition, it is assumed that a dead battery of a terminal itself may occur in case of a seismic disaster or the like. According to the access point 110 of PTL 1, it becomes possible to charge a terminal through a USB port. However, even in the case of the access point 110 of PTL 1, a network is not formed unless a transmission network beyond a base station is ensured. Further, since it is premised on a network connection through a USB port, there has been a problem that the major data such as personal information is exposed to danger when information is exchanged through the radio LAN which has some concerns about security.

A first object of the present invention is to provide a radio transmission apparatus which can operate a network system including a microwave communications system and a radio LAN so that sufficient security is obtained in a short time without limitation to a choice of a place.

In addition, a second object of the present invention is to provide a radio transmission apparatus which can supply power to a terminal that obtained a sufficient security authentication.

### [Solution to Problem]

A radio transmission apparatus according to the present invention includes: a radio transmission circuit that performs radio communications with microwave; a radio LAN circuit that performs radio LAN communications with a terminal having a radio communication function; a router circuit that processes and transmits data exchanged between the radio transmission circuit and the radio LAN circuit; a power feeding port that supplies power to the terminal; a security information storage unit that stores security information on a connection of the terminal with the radio LAN circuit and the power feeding port; and a control unit that controls the radio transmission circuit, the radio LAN circuit, the router circuit, and the power feeding port, wherein the security information storage unit includes a first security mode related to a standardized security authentication, and a second security mode related to the connection between the terminal and the power feeding port, and the control unit permits the radio LAN communication between the terminal and the radio LAN circuit by the first security mode, and supplies the power from the power feeding port to the terminal authenticated by the second security mode.

### [Advantageous Effects of Invention]

According to the radio transmission apparatus of the present invention, in a site of a disaster or a remote place where a wired transmission network is not available, it is possible to provide an operation of a network system including a microwave communications system and a radio LAN in a short time without limitation to a choice of a place.

In addition, according to the radio transmission apparatus of the present invention, it is possible to provide sufficient security when power is supplied to a terminal which has been unavailable by a dead battery at the time of a disaster or the like, since a network connection is established on the premise of a security authentication.

### [Brief Description of Drawings]

[Fig. 1] Fig. 1 is a conceptual diagram of a radio transmission network according to a first exemplary embodiment of the present invention.
[Fig. 2] Fig. 2 is a block diagram of a radio transmission apparatus according to the first exemplary embodiment of the present invention.
[Fig. 3] Fig. 3 is a flowchart regarding power feeding of the radio transmission apparatus according to the first exemplary embodiment of the present invention.
[Fig. 4] Fig. 4 is a conceptual diagram of a radio transmission system according to the first exemplary embodiment of the present invention.
[Fig. 5] Fig. 5 is a conceptual diagram of the radio transmission system according to the first exemplary embodiment of the present invention.
[Fig. 6] Fig. 6 is a conceptual diagram of the radio transmission system according to the first exemplary embodiment of the present invention.
[Fig. 7] Fig. 7 is a conceptual diagram of the radio transmission system according to the first exemplary embodiment of the present invention.
[Fig. 8] Fig. 8 is a block diagram of a radio transmission apparatus according to a second exemplary embodiment of the present invention.
[Fig. 9] Fig. 9 is a flowchart regarding power feeding of the radio transmission apparatus according to the second exemplary embodiment of the present invention.
[Fig. 10] Fig. 10 is a flowchart regarding power feeding of the radio transmission apparatus according to the second exemplary embodiment of the present invention.

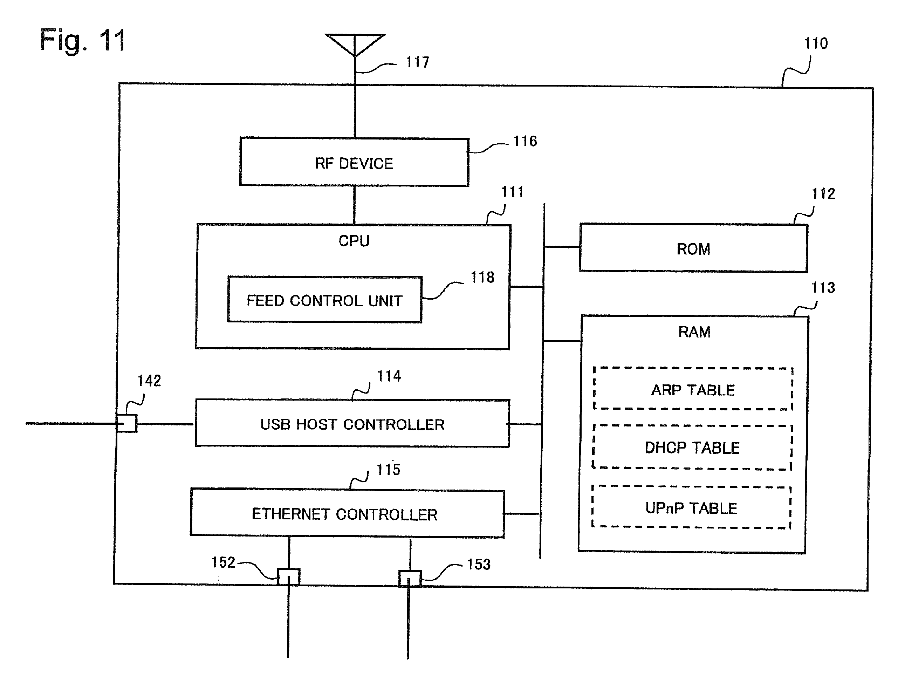

[Fig. 11] Fig. 11 is a block diagram illustrating an access point in PTL 1.

### [Description of Embodiments]

### (First exemplary embodiment)

In the following, a radio transmission apparatus according to the first exemplary embodiment of the present invention will be described with reference to drawings. Note that each exemplary embodiment described below is only one example for carrying out the present invention, but does not limit the present invention.

### (Configuration)

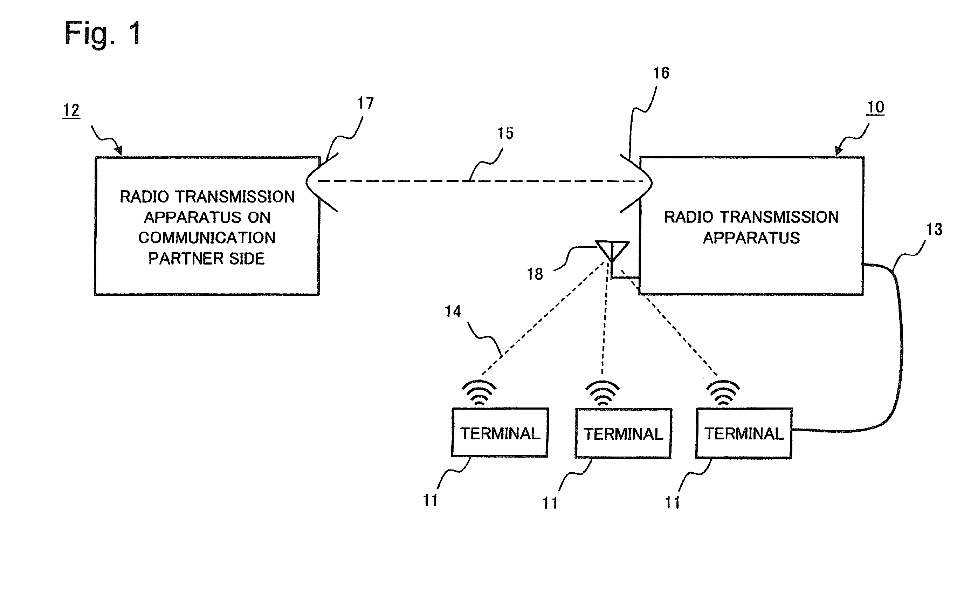

Fig. 1 illustrates a conceptual diagram of a radio transmission network according to the first exemplary embodiment of the present invention.

In the radio transmission network of Fig. 1, a radio transmission apparatus 10 is connected to terminals 11 through wireless channels 14. In addition, the radio transmission apparatus 10 is connected to a radio transmission apparatus on communication partner side 12 through a wireless channel 15.

In Fig. 1, each wireless channel 14 is a radio LAN channel established between an antenna 18 of the terminal 11, and an antenna 16 of the radio transmission apparatus 10. The wireless channel 15 is a radio transmission channel established between the antenna 16 of the radio transmission apparatus 10, and an antenna 17 of the radio transmission apparatus on communication partner side 12. It is assumed that parabolic antennas are used as the antennas 16 and 17. However, both wireless channels 14 and 15 are not limited to wireless transmission channels through the radio LAN channel and the parabolic antennas. It is sufficient that the wireless channel 15 is, for example, a wireless channel through which the radio transmission apparatuses away from each other about several kilometers can be communicated. It is sufficient that each wireless channels 14 is, for example, a wireless channels through which the terminal and radio transmission apparatus away from each other about several meters.

The radio transmission apparatus 10 is connectable to the terminal 11 with a cable 13. Therefore, the radio transmission apparatus 10 can supply power to the terminal 11, and can connect the terminal 11 to an external network beyond the radio transmission apparatus on communication partner side 12 through the cable 13 as well.

In a radio transmission system according to a radio transmission circuit using a high-speed packet communication or the like provided by a career for a general public service, a radio transmission apparatus is not provided with a port for directly connecting to a terminal with a cable. Therefore, general radio transmission apparatuses is not connected to the terminal 11 with a cable directly to supply the power thereto, as in the radio transmission apparatus 10 according to the present exemplary embodiment. Note that even if connecting a general radio transmission apparatus to the terminal 11 is possible by a wired connection, such connection is not made normally for security reasons.

The radio transmission apparatus 10 can be configured by an outdoor unit including a microwave receiving unit and an indoor unit including a modulation and demodulation unit, but preferably configured by an integrated structure in which the microwave receiving unit and the modulation and demodulation unit are provided, the structure being an outside installation type.

### [Microwave communication function]

In the radio transmission network of Fig. 1, the radio transmission apparatus 10 and the radio transmission apparatus on communication partner side 12 can establish a wireless connection through the wireless channel 15 formed by the antenna 16 and the antenna 17. For example, an ultra-small microwave communications system such as PASOLINK (registered trademark) is applicable as the radio transmission apparatus 10 and the radio transmission apparatus on communication partner side 12. PASOLINK performs a radio transmission using a frequency within the microwave band of several gigahertz to several tens of gigahertz. Note that Fig. 1 illustrates the wireless channel 15 using parabolic antennas, but the exemplary embodiment is not limited to the wireless channel using the parabolic antennas.

For example, as a frequency band of the wireless channel 15, any of frequency bands including a frequency band of 2.4 GHz (2.4 to 2.5 GHz) and a frequency band of 5 GHz (5.15 to 5.35 GHz, 5.47 to 5.725 GHz; 4.9 to 5.0 GHz, 5.03 to 5.091 GHz) can be used. As the frequency band of the wireless channel 15, for example, any of frequency bands including a frequency band of 60 GHz (57 to 66 GHz) and a frequency band of 80 GHz (71 to 76 GHz, 81 to 86 GHz) can also be used. Note that the wireless communications between the radio transmission apparatus 10 according to the first exemplary embodiment and the radio transmission apparatus on communication partner side 12 may be performed on not only the frequency from several gigahertz to several tens of gigahertz but also a frequency in the vicinity thereof or a class of megahertz frequency band. Further, even if a frequency band is not a microwave frequency band, the microwave communication function of the exemplary embodiment is applicable as long as a communication mechanism equivalent to microwave is applicable.

An ultra-small microwave communications system such as PASOLINK does not require a long-distance wired connection and can form a transmission network relatively easily and quickly.

The radio transmission network using the ultra-small microwave communications system such as PASOLINK is introduced for services provided by carriers such as a mobile business operator. For example, it has been utilized for connecting base stations for mobile phones with each other by radio, for connecting a base station and a control station which is a host system of the base station, or for dedicated lines for companies or fixed lines of carriers. Therefore, the radio transmission system using the radio transmission apparatus 10 according to the first exemplary embodiment can be applied to the existing communication services.

When a function for serving as an access point is introduced into the ultra-small microwave communications system such as PASOLINK, a transmission network can be formed without wired connections between the access point and the base station and between the access point and the control station.

In addition, PASOLINK itself is low in cost in comparison with a general communications system which requires the wired connection and the time for formation can be set shorter, whereby meeting the needs of forming a communication network immediately. Note that the radio transmission apparatus of the present invention is not limited to PASOLINK, but a radio transmission apparatus using a radio transmission channel may be used.

### [Radio LAN function]

In Fig. 1, the radio transmission apparatus 10 and the terminal 11 are connected by a radio LAN. The frequency band used in the radio LAN is preferably in accordance with IEEE802.11-related standards, for example. Specifically, any of frequency bands including a frequency band of 2.4 GHz (2.4 to 2.5 GHz) and a frequency band of 5 GHz (5.15 to 5.35 GHz, 5.47 to 5.725 GHz; 4.9 to 5.0 GHz, 5.03 to 5.091 GHz) can be used. Note that in the radio transmission apparatus 10 according to the first exemplary embodiment, the frequency band used between the terminal 11 and the radio transmission apparatus 10 is not limited to the band described herein, but may a frequency band which can be used together with the above-described microwave communication function.

The radio transmission apparatus 10 and the terminal 11 can be connected by a WiFi connection. The WiFi connection ensures the security in accordance with IEEE802.11 (IEEE: the Institute of Electrical and Electronic Engineers). Therefore, the security in the connection between the terminal 11 and the radio transmission apparatus 10 is ensured. For example, the terminal 11 and the radio transmission apparatus 10 can exchange data encrypted by an authentication program such as WPA and WPA2 (WPA: Wi-Fi Protected Access).

In addition, by using the pre-shared key mode used in the WiFi connection, problems relating to a security are solved in the wireless channel 15 between the radio transmission apparatus 10 and the radio transmission apparatus on communication partner side 12. For example, an encryption key, such as WPA-PSK and WPA2-PSK (WPA-PSK: Wi-Fi Protected Access Pre-Shared Key), can be shared between apparatuses. Although an authentication passphrase may be required in the pre-shared key mode in some cases, the authentication passphrase can be stored in the terminal 11 and also in the radio transmission apparatus 10 which functions as an access point. Therefore, it is possible to connect the terminal 11 to the radio transmission apparatus 10 safely without a server authentication.

In the WiFi connection, a connection is established between the terminal 11 and an external network such as the Internet by a passphrase authentication. Therefore, when using the terminal 11 capable of establishing the WiFi connection, the network beyond the radio transmission apparatus on communication partner side 12 and the terminal 11 are connected safely.

In addition, when a WiFi authentication is used between the radio transmission apparatus 10 which functions as an access point and the terminal 11, interconnectivity is ensured even between the terminals manufactured by different manufacturers. Therefore, it is possible to perform data communications between terminals 11 different from each other through the radio transmission apparatus 10, and it is also possible to perform direct data communications between terminals 11 different from each other.

### [Feeding function]

In Fig. 1, the radio transmission apparatus 10 can supply power to the terminal 11 through the cable 13. The terminal 11 may connect to the external network through the cable 13, but it is assumed that the purpose is only a power supply and a network connection is established through a radio LAN environment in the first exemplary embodiment. It is assumable that the connection to the external network through the cable 13 may cause a leakage of the data in the terminal 11 to the external network, but the present exemplary embodiment is premised on the WiFi connection, whereby preventing the data in the terminal 11 from flowing out without a user's authentication.

In a general radio transmission apparatus, even if a port such as a USB port capable of feeding is provided, such a port that is directly connected to the terminal 11 is not provided. The reasons include that it is not necessary to connect with a wire because the radio transmission apparatus and the terminal 11 are connected by the radio LAN, and there is a problem on the security at the time of being automatically connected to a network caused by a connection of the terminal 11 with the port capable of feeding. In addition, one of the reasons is a physical restriction that a general radio transmission apparatus is installed at a high place.

According to the radio transmission apparatus 10 related to the first exemplary embodiment, since a secure communications system based on the WiFi authentication or the like is used, a sufficient security level can be achieved even if a connection to the external network is established through the port capable of feeding. When residual quantity of a battery is not sufficient in the terminal 11, it is possible to supply power from the radio transmission apparatus 10 to the terminal 11 through the port capable of feeding such as a USB port.

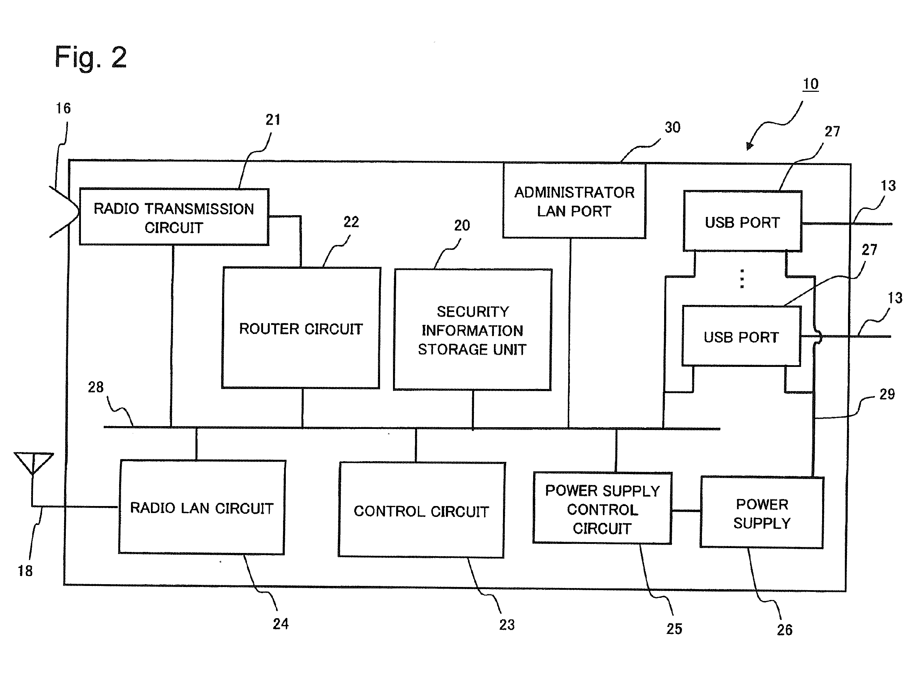

Fig. 2 illustrates a block diagram of the radio transmission apparatus 10 according to the first exemplary embodiment of the present invention.

As illustrated in Fig. 2, the radio transmission apparatus 10 according to the first exemplary embodiment of the present invention includes a security information storage unit 20, a radio transmission circuit 21, and the antenna 16 connected to the radio transmission circuit 21, a router circuit 22, a control circuit 23, a radio LAN circuit 24, the antenna 18 connected to the radio LAN circuit 24, a power supply control circuit 25, a power supply 26, the USB port 27, and an administrator LAN port 30. Note that the control circuit 23 may be configured to function as a control unit which controls each component of the radio transmission apparatus 10, and in that case, it is not necessary to separately provide the control circuit 23 and the power supply control circuit 25.

The components inside the radio transmission apparatus 10 are connected so that data can be exchanged via an internal bus 28. The power supply 26 and the USB port 27 are connected so that power can be exchanged via a power supply bus 29. Note that a plurality of USB ports 27 may be provided.

The security information storage unit 20 stores security information for determining whether or not permitting the terminal 11 to communicate with the radio transmission apparatus 10 when the terminal 11 is connected to the USB port 27.

The security information stored in the security information storage unit 20 is information on security, such as authentication information and information of the pre-shared key, which are required when the terminal 11 establishes the radio LAN connection, and common key information set by an administrator. Note that when the radio LAN connection is premised on the WiFi connection, WiFi authentication information is stored as the security information.

By using the information stored in the security information storage unit 20, the terminal 11 can be authenticated without passing through the external network, for example, by a pre-shared key authentication performed between apparatuses. When the terminal 11 is connected to the USB port 27, an open system authentication may be performed and authentication information of the terminal 11 may be acquired by asking an external server an individual number such as a serial number of the terminal 11.

### (Security)

The security information stored in the security information storage unit 20 includes four kinds of modes described as follows. Note that a security mode not included in the following modes may be stored in the security information storage unit 20.

A first security mode is a security mode regarding authentication required in order that the user of the terminal 11 receives the WiFi service.

In the first security mode, only the users of the terminals 11 which have received the WiFi service are objects for receiving the provided service in a situation other than a disaster and an urgent purpose. The first security mode is set between a user of the terminal 11 and a provider of the WiFi service. Therefore, the benefit on security, such as WPA and WPA2, can be achieved.

The first security mode is also an authentication mode for establishing the wireless channel 14 between the radio transmission apparatus 10 and the terminal 11, and is an authentication mode for establishing a wired connection through the USB port 27. Therefore, the terminal 11 authenticated by the first security mode means that the terminal has also been authenticated by the second and third security modes which are described later. Note that the terminal 11 which does not receive the provided WiFi service is not allowed to utilize this security mode.

A second security mode is a security mode for the terminal 11 to connect with the USB port 27, and to receive the feeding.

The second security mode includes a mode in which an authentication is performed with a management center which manages the radio transmission apparatus 10 through the external network such as the Internet, and a mode which receives a feed service according to a manual input of an authentication ID / a password at the time of a disaster on site. In the mode in which the authentication is performed through the external network, it is preferable to obtain the security authentication such as WPA and WPA2. In the mode in which the authentication ID / the password are manually input, it is possible to connect with the USB port 27 as long as the unique ID and the password are input to the radio transmission apparatus 10, and it is only necessary to authenticate the apparatuses each other without passing through the external server or the like. The mode includes temporarily supplying the power to the terminal 11 which is permitted to connect to the USB port 27 by the administration terminal.

The second security mode is needed when connecting the terminal 11 which has not contracted for the above-described WiFi service to the power feeding port such as the USB port 27 of the radio transmission apparatus 10. Note that it is deemed that the terminal 11 which has authenticated in the first security mode has also been authenticated in the second security mode.

A third security mode is a security mode for connecting the terminal 11 to the USB port 27 and switching from the Internet service provided for WiFi to a wire connection provided on a cable basis.

The third security mode includes an authentication mode for the terminal 11 which receives the WiFi service. Therefore, it is deemed that the terminal 11 authenticated in the first security mode has also been authenticated in the third security mode. An authentication is performed to the terminal 11 not receiving the WiFi service, in which individual setting is made between the radio transmission apparatus 10 and the terminal 11, and an authentication is performed to the terminal 11 individually authenticated with the management center and the administration terminal, which manage the radio transmission apparatus 10. Therefore, in a third security mode, it is preferable to obtain the security authentication such as WPA and WPA2. According to the third security mode, it is possible to connect to the external network through the USB port 27 as in the case where the WiFi authentication is obtained through the radio LAN.

A fourth security mode is a security mode for the LAN ports, in which the administration terminal is connected to the administrator LAN port 30, and configuration, registration and management on the security for connecting the terminal 11 to the radio transmission apparatus 10 are performed.

The fourth security mode relates to the security when an apparatus administrator connects to the radio transmission apparatus 10 through the administrator LAN port 30 by using the administration terminal. The apparatus administrator registers, by using the administration terminal such as a personal computer, other security keys, and locally manages the users. Therefore, the fourth security mode is a security mode for securely connecting the radio transmission apparatus 10 to the administration terminal. In addition, it is assumed that the fourth security mode includes the security for a connection between the administration terminal and the external network.

The above is the four modes of the security in the present exemplary embodiment. Note that it is possible to add various modes based on the above-described security modes in the radio transmission apparatus of the present invention.

### (Radio transmission circuit)

The radio transmission circuit 21 in Fig. 2 is a general radio transmission circuit provided with a circuit modulating and demodulating a signal, a circuit processing the signal to be transmitted and received, and the like.

The radio transmission circuit 21 converts the signal transferred from the router circuit 22 for transmitting the signal as electromagnetic waves from the antenna 16. An electromagnetic wave signal received by the antenna 16 is also converted so that internal processing thereto can be carried out. When the signal transferred from the router circuit 22 has not been modulated, the radio transmission circuit 21 modulates the signal so that the signal can be transmitted from the antenna 16. The radio transmission circuit 21 demodulates the signal received by the antenna 16. Further, the radio transmission circuit 21 amplifies the signal transmitted and received with the antenna 16, and the like.

The router circuit 22 is such a circuit included in a general router, and handles a connection of a line, a transfer and sorting of IP packets (IP: Internet Protocol), and a management of routing information. In addition, as for the router circuit 22, the router circuit 22 performs the internal processing, such as reception, analysis, processing, and sending out of the IP packets.

The router circuit 22 processes the signal transferred from the radio LAN circuit 24, and transfers the signal to the radio transmission circuit 21. In the first exemplary embodiment, the router circuit 22 and the USB port 27 do not communicate with each other by a direct communication. Therefore, in the first exemplary embodiment, it is assumed that a network communication without passing through the radio LAN circuit 24 is not performed.

The control circuit 23 controls the entire radio transmission apparatus 10. For example, a CPU (Central Processing Unit) can be used as the control circuit 23.

The control circuit 23 controls the wireless communications of the radio transmission circuit 21. In addition, the control circuit 23 controls processing of the router circuit 22 and the radio LAN circuit 24, and also controls the wireless communications through the radio LAN circuit 24. Further, the control circuit 23 controls an operation such that an instruction is output when the power supply control circuit 25 controls the power supply 26.

The control circuit 23 also manages a security in a communication and a connection by the security information stored in the security information storage unit 20. In addition of those functions, the control circuit 23 also performs a control for totally adjusting processing of the radio transmission circuit 21.

The radio LAN circuit 24 is a circuit performing communication processing for a general radio LAN, and also implements security measures using the security information stored in the security information storage unit 20. According to the security function provided by the radio LAN circuit 24, the security according to a general WiFi authentication, such as WPA and WPA2, can be achieved.

The radio LAN circuit 24 transfers, to the router circuit 22, the information transmitted from the terminal 11. The radio LAN circuit 24 has the security function which encrypts data and performs access control when connecting the terminal 11 connected to the radio transmission apparatus 10 to the external network such as the Internet. Note that in the present exemplary embodiment, it is assumed that the communication function for the wireless communication with the terminal 11 is included in the radio LAN circuit 24.

The radio LAN circuit 24 can ensure the security of connection between the terminal 11 and the radio transmission apparatus 10 by the security information stored in the security information storage unit 20. The authentication information between the terminal 11 and the radio transmission apparatus 10 may be stored in both apparatuses, or may be stored in one of the apparatuses. As concrete authentication information, the information on the pre-shared key mode can be used, for example. Although it is necessary to acquire the pre-shared key from a server through the external network in advance, the pre-shared key may be acquired from a server according to the information of the terminal 11, if necessary. The pre-shared key may be set between the apparatuses connected each other by the radio LAN, or may be set for the individual terminal 11 by an administration apparatus. It is assumed that the above-described security management follows with the priority to the control by the control circuit 23.

The power supply control circuit 25 performs a power control for the radio transmission apparatus 10. In particular, the power supply from the power supply 26 through the USB port 27 is controlled. The power supply control circuit 25 controls ON-OFF of the power in response to the connection conditions of the USB port 27.

It is premised that the power supply from the USB port 27 to the terminal 11 is performed only to the terminal 11 which shares the authentication information with the radio LAN circuit 24. However, it is also assumed that, in emergencies such as a disaster, supplying a predetermined amount of electric energy is permitted to the terminal 11 which does not share the authentication information with the radio LAN circuit 24. The predetermined amount herein may be preferably set to an urgently-required amount of electric energy, for example, the electric energy which can make a telephone call for five minutes, the electric energy which can make a network connection for thirty minutes, the electric energy which can wait an incoming call or a reception of message for two hours, or the like. However, the power supply to the terminal 11 is not limited to the examples described above, and electric power may be supplied regularly to the authenticated terminal 11 as long as the radio transmission apparatus 10 can receive sufficient power.

The power supply 26 supplies electric power through the USB port 27 under the control by the power supply control circuit 25. For example, the power supply 26 can convert the commercial AC power supply from outside into DC, and can supply the power through the USB port 27. As the power supply 26, secondary batteries may be used together, such as a lithium ion storage battery, a lithium ion polymer storage battery, a lead storage battery, a nickel hydride storage battery, a nickel-cadmium battery, and a sodium-sulfur battery, common dry cells and a fuel cell. Further, as the power supply 26, power generators using natural power sources may be used together, such as solar power generation, wind power generation, water-power generation, wave power generation, and geothermal power generation. Note that the power supply 26 is not limited to above-described ones, but a power supply which can supply the power to the terminal 11 may be used.

The USB port 27 is a connector terminal for connecting the terminal 11 or the like via the cable 13. The USB port 27 can supply the power from the power supply 26 to the terminal 11 under the control of the power supply control circuit 25. The USB port 27 can also perform data communication with the terminal 11. However, in the radio transmission apparatus 10 according to the first exemplary embodiment of the present invention, a network connection is not established even if the USB port 27 and the terminal 11 are connected via the cable 13, and the connection for the electric power supply is made after checking the security information stored in the security information storage unit 20. Note that although the USB port is exemplified in the first exemplary embodiment, it is not limited to the USB port and a connector terminal which can supply the power may be used. A feed apparatus capable of wireless feeding may be connected to the radio transmission apparatus 10 as long as the terminal 11 can perform the wireless feeding. Herein, it is assumed that respective USB ports 27 have policies set for each port. Therefore, it is preferable to have authentication security for each port.

The administrator LAN port 30 is a LAN port to set the security by the administrator of the radio transmission apparatus 10. The administrator LAN port 30 is to connect the terminal 11 such as a personal computer by the administrator, and to register a security key or locally manage the user. The administrator LAN port 30 is connectable with an eight-core modular type connector, such as RJ45. The authentication security based on the fourth security mode is provided between apparatuses of the administrator terminal and the administrator LAN port 30. Further, the administrator LAN port 30 can also set the security about the terminal 11 connected to the USB port 27. Note that it is assumed that the administrator is a career or an ISP (Internet Services Provider), and therefore it is assumed that the administrator LAN port 30 and each USB port 27 have policies set for each port. Therefore, it is preferable to have the authentication security for each port.

The above is the internal configuration of the radio transmission apparatus 10 illustrated in Fig. 2. Note that the radio transmission apparatus 10 illustrated in Fig. 2 is an example of the first exemplary embodiment, and does not limit the present invention.

### (Power feeding)

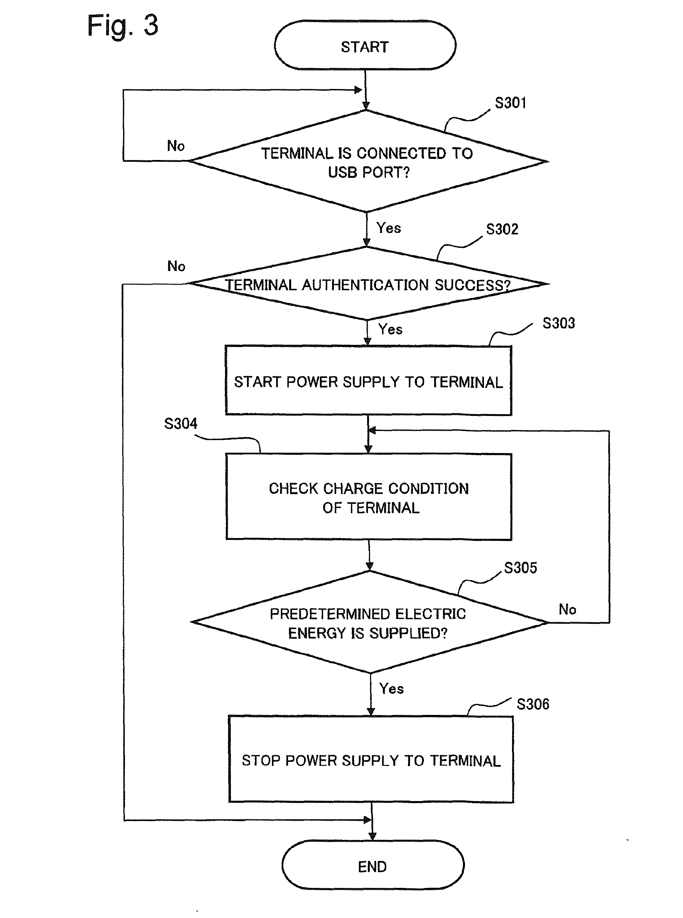

Hereinafter, along with a flowchart of Fig. 3, a feed operation of the radio transmission apparatus 10 according to the first exemplary embodiment will be described. Although it is assumed that the determination subject in the following operation is the control circuit 23, another component may be the determination subject.

In Fig. 3, first, the control circuit 23 determines whether or not the terminal 11 is connected to the USB port 27 (step 301).

When the terminal 11 is connected to the USB port 27 (Yes in step 301), the control circuit 23 determines whether or not the authentication information of the terminal 11 match the authentication information stored in the security information storage unit 20 (step 302). In other words, in the step 302, it is determined whether or not the terminal 11 has authenticated in the second security mode. When the terminal 11 is not connected to the USB port 27 (No in step 301), it waits until the terminal 11 is connected to the USB port 27.

When the authentication information of the terminal 11 matches the authentication information stored in the security information storage unit 20 (Yes in step 302), the power supply control circuit 25 outputs, to the power supply 26, an instruction to start the power supply to the terminal 11 (step 303).

When the authentication information of the terminal 11 does not match the authentication information stored in the security information storage unit 20 (No in step 302), this flow is terminated.

The power supply control circuit 25 checks the charge condition of the terminal 11, and notifies the control device 23 of the charge condition of the terminal 11 (step 304).

The control circuit 23 determines whether or not the charged electric energy of the terminal 11 reaches predetermined electric energy (step 305). The predetermined electric energy herein may be set to an urgently-required amount of electric energy, for example, the electric energy which can make a telephone call for five minutes, the electric energy which can make a network connection for thirty minutes, the electric energy which can wait an incoming call or a reception of message for two hours. Note that the amount of power supply to the terminal 11 is not limited to the values described above.

When the charged electric energy of the terminal 11 reaches the predetermined electric energy (Yes in step 305), the power control circuit 25 stops the power supply to the terminal 11 (step 306). When the charged electric energy of the terminal 11 does not reach the predetermined electric energy (No in step 305), it returns to step 304.

The above is the description of the operation of the radio transmission apparatus 10 according to the first exemplary embodiment. Note that the flow in the flowchart illustrated in Fig. 3 are an example of the operation of the radio transmission apparatus 10 according to the first exemplary embodiment, it is assumed that such a change that processing order in the flowchart of Fig. 3 is changed or some procedures are slightly changed is within the scope of the present invention.

### (Radio transmission system)

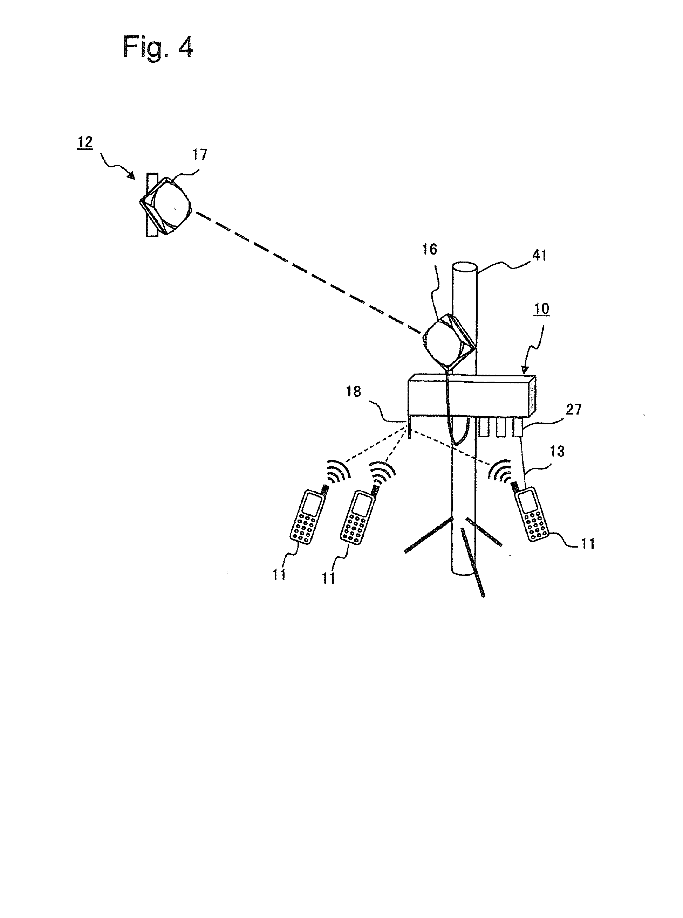

Fig. 4 is a conceptual diagram of the radio transmission system using the radio transmission apparatus 10 according to the first exemplary embodiment of the present invention.

The radio transmission apparatus 10 is installed on a pole 41, and is provided at a position from which a radio communication is possible with the radio transmission apparatus on communication partner side 12. For example, the pole 41 may include a leg part like a tripod placed in movable manner, or may be an immovable one like a telegraph pole. It is assumed that the radio transmission apparatus 10 is normally installed outdoor.

The radio transmission apparatus 10 is provided with the USB port 27, is connectable via the cable 13 to the terminal 11 which are required to be charged, and can supply the power to the terminal 11. The terminal 11 is connectable to the external network through a wireless channel, after authenticated by the WiFi authentication, but the terminal 11 does not connect to the external network through the USB port 27 in the first exemplary embodiment.

### (Modifications)

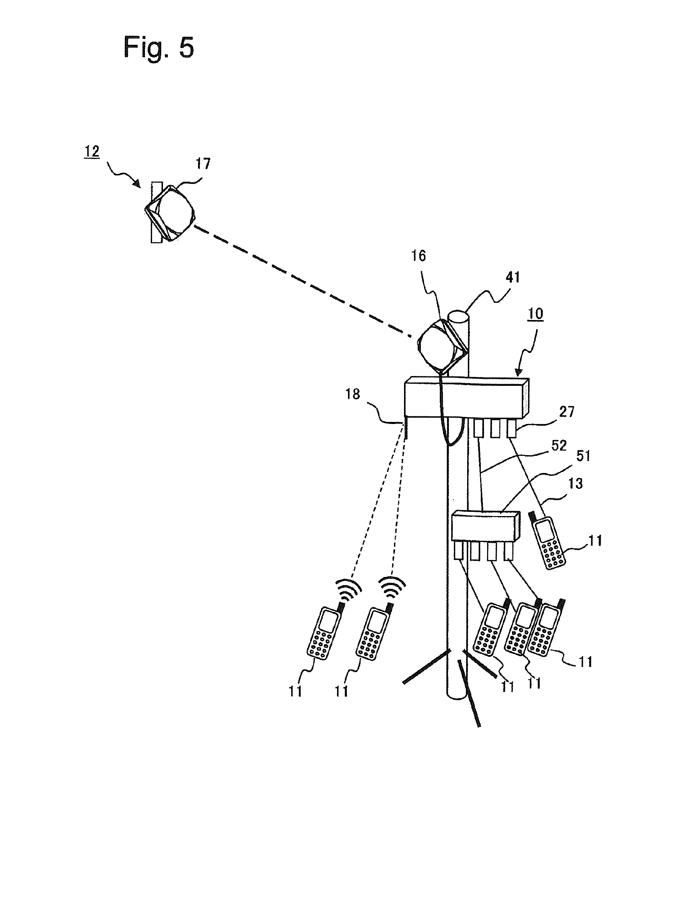

Fig. 5 to Fig. 7 illustrate modifications of the radio transmission system according to the first exemplary embodiment of Fig. 4.

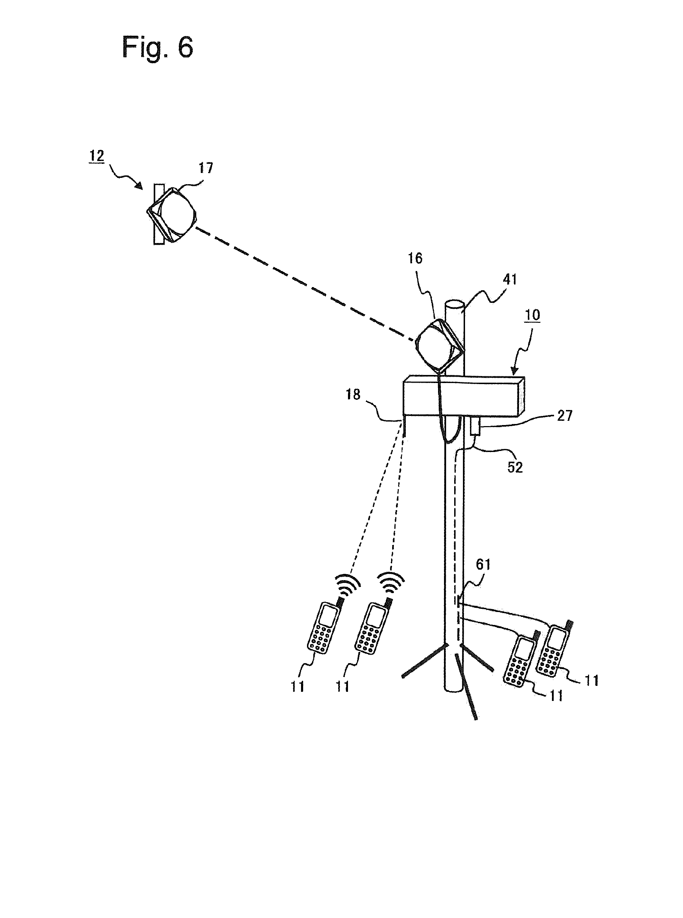

Fig. 5 illustrates an example in which an extension cable 52 is extended from the USB port 27 of the radio transmission apparatus 10, and extended USB ports 51 are provided. The radio transmission apparatus 10 is installed at a high place by using a support rod such as the pole 41, if necessary. Therefore, it is assumed the terminal 11 is not connectable directly to the USB port 27 of the radio transmission apparatus 10 installed at the high place. In that case, as the modification of Fig. 5, it becomes easy to supply the power to the terminal 11 from the radio transmission apparatus 10 by installing the extended USB ports 51 at a position easy to operate for the user of the terminal 11. Note that Fig. 6 illustrates such that the extension cable 52 is extended from the USB port 27, but it is not necessary to connect with the power supply 26 through the USB port 27 as long as the power can be supplied to the extended USB port 51.

Fig. 6 illustrates an example in which an extension cable 52 connected to the USB port 27 is passed through inside the pole 41 on which the radio transmission apparatus 10 is installed, and the terminal 11 is enabled to receive the power supply from a USB port 61 provided on the lower part of the pole 41. According to the modification of Fig. 6, the power supply to the terminal 11 becomes easy without providing the extended USB ports 51, since the USB port 61 is installed at the position easy to operate for the user of the terminal 11. Note that Fig. 6 illustrates such that the extension cable 52 is extended from the USB port 27, but it is not necessary to connect with the power supply 26 through the USB port 27 as long as the power can be supplied to the extended USB port 61.

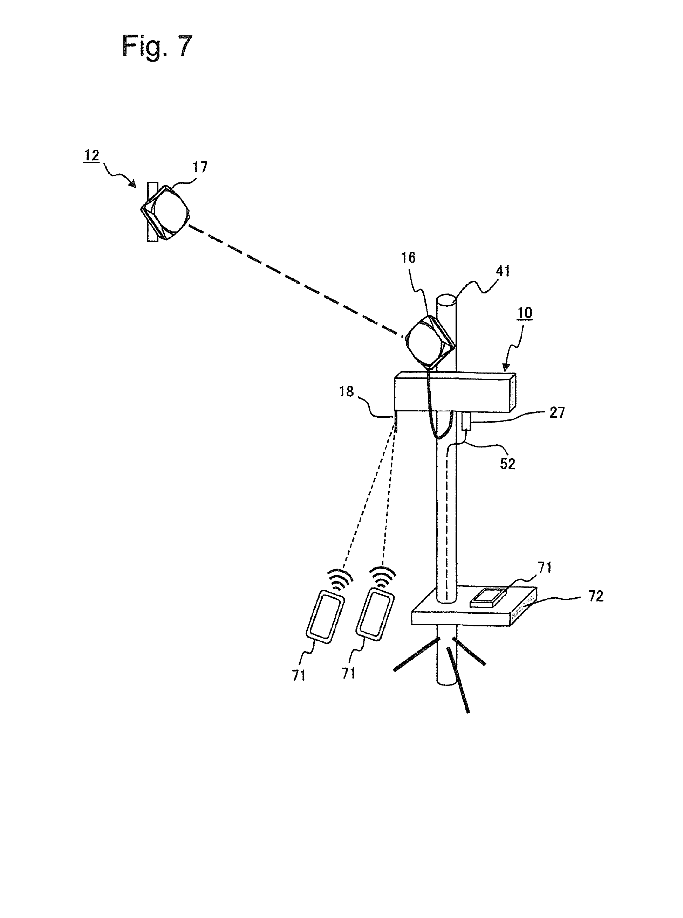

Fig. 7 illustrates an example in which a cable 13 connected to the USB port 27 is passed inside the pole 41 on which the radio transmission apparatus 10 is installed, and power is supplied to a terminal 71 from a feed device 72 capable of wireless feeding. Some terminals 71 such as smartphones can receive the wireless feeding. For example, as a system of wireless feeding, systems such as an electromagnetic induction system, a radio wave system, and an electromagnetic-field resonance system can be used. However, as for the electromagnetic wave used in the wireless feeding, it is preferable to use a frequency band which does not interfere with the electromagnetic wave used by the radio transmission circuit 21 or the radio LAN circuit 24.

With respect to such a terminal 71, the power supply to the terminal 71 according to the wireless feeding becomes possible by providing the feed device 72 at the position easy to operate for the user of the terminal 71. Note that Fig. 7 illustrates such that the extension cable 52 is extended from the USB port 27, but it is not necessary to connect with the power supply 26 through the USB port 27 as long as the power can be supplied to the feed device 72.

### (Network connection)

The microwave communication and the network connection including the radio LAN connection according to the exemplary embodiment will be briefly described using Fig. 2.

When the antenna 18 receives a signal from the terminal 11, the control circuit 23 determines the security mode of the terminal 11 on the basis of the security information stored in the security information storage unit 20. When authenticated by the first security mode, in other words, when authenticated by the WiFi authentication, the control circuit 23 permits the terminal 11 to connect to the external network through the radio LAN circuit 24. In this case, the router circuit 22 performs signal processing so that the microwave communication can be carried out through the radio transmission circuit 21 for the date received from the radio LAN circuit 24. The radio LAN circuit 24 transmits the signal received from the router circuit 22 to the radio transmission apparatus on communication partner side 12 from the antenna 16.

The radio transmission apparatus on communication partner side 12 transmits the signal received from the radio transmission apparatus 10 to a network beyond the radio transmission apparatus on communication partner side 12.

Moreover, the radio transmission circuit 21 transmits, to the router circuit 22, the signal received with the antenna 16 from the radio transmission apparatus on communication partner side 12. The router circuit 22 performs the signal processing on the signal received from the radio transmission circuit 21 so that the signal can be transmitted from the radio LAN circuit 24, and transmits the processed signal to the radio LAN circuit 24. Then, the radio LAN circuit 24 transmits the signal towards the terminal 11 from the antenna 18. In this way, the network including the radio transmission system according to the exemplary embodiment of the present invention is formed. Note that in the first exemplary embodiment, a network connection through the USB port 27 is not established.

The above is an outline of the network connection according to the exemplary embodiment of the present invention. However, the above-described network connection is an example and various modifications can be made.

As described above, according to the radio transmission system using the radio transmission apparatus of the present exemplary embodiment, it is possible to perform a radio transmission between the radio transmission apparatuses, and to supply the power by connecting the user terminal to the USB port. Further, it is possible to provide the WiFi service to the user terminal by using a WiFi spot function. The user terminal can be used as a terminal for the WiFi service or the mobile service of 3G/LTE (Long Term Evolution), while receiving the power supply through the USB.

The radio transmission apparatus of the present exemplary embodiment may be an outdoor type radio transmission apparatus provided with a plurality of USB ports for subscriber connections and a radio LAN having a WiFi security function. Therefore, the WiFi service can be provided while simultaneously connecting/supplying power to a plurality of user terminals utilizing equipment, such as a mobile phone, a smartphone, a tablet terminal, a notebook personal computer, a portable personal computer, and a game terminal. Further, the apparatus also functions as a WiFi apparatus for a hot spot which makes a radio transmission possible between the radio transmission apparatus on communication partner side which is placed at a separated place and the radio transmission apparatus. In other words, combining an ultra-small microwave communications system and a radio LAN as in the present exemplary embodiment enables an urgent construction of a transmission network, even when a wired transmission network has been broken at the time of a disaster such as an earthquake.

According to the radio transmission system using the radio transmission apparatus of the present exemplary embodiment, the terminal with a dead battery can be connected to the USB port to utilize a network environment at the time of a disaster or the like. In addition, it is possible to provide the WiFi service to the terminal by including the WiFi function and to transmit the traffic of the user terminal through radio.

Further, since the radio transmission apparatus of the present exemplary embodiment can be easily installed outdoor, it is expected to serve as equipment for public in an area where optical fibers or the like has been disconnected at the time of a disaster or the like. Furthermore, using the radio transmission apparatus of the present exemplary embodiment enables a hot spot installation in a short time.

### (Second exemplary embodiment)

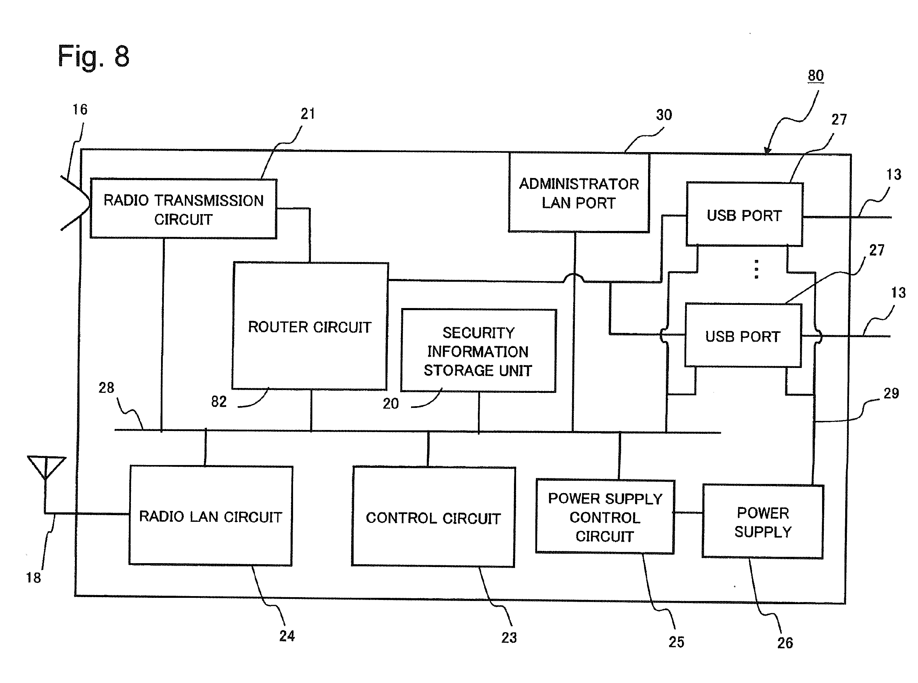

Fig. 8 illustrates a block diagram of a radio transmission apparatus according to a second exemplary embodiment of the present invention.

In a radio transmission apparatus 80 according to the second exemplary embodiment of the present invention, the same reference signs as the first exemplary embodiment are assigned to components having functions which are substantially the same as the radio transmission apparatus 10 of the first exemplary embodiment.

In the radio transmission apparatus 80 of the second exemplary embodiment, a router circuit 82 and USB ports 27 are connected so as to communicate with each other, and a USB-connection mode in consideration of security can be set. Note that in the radio transmission apparatus 80 of the second exemplary embodiment, it is assumed that the router circuit 82 has an original security function since the router circuit 82 is connected to the USB ports 27 so as to communicate with each other.

### (USB-connection mode)

The USB-connection mode according to the second exemplary embodiment is as follows.

A first mode is a mode in which power is supplied only to the terminal 11 connected to the USB port 27, and the data communications through the USB are not permitted. This is the same connection mode as the first exemplary embodiment. The first mode receives the security according to the second security mode.

A second mode is a mode in which the power is supplied to the terminal 11 connected to the USB port 27, and the data communications through the USB are permitted. This is a mode which enables a management on security by performing data processing in an independent circuit separated from the radio LAN circuit 24 providing the WiFi service. Note that in a connection with the external network in the second mode, a limited access is available only to secure sites limited in comparison with the WiFi connection. The second mode is connected to the external network under an original security according to the router circuit 82 while receiving the security according to the second security mode. The original security according to the router circuit 82 is a situation that an access is permitted only to the sites determined as secure by a filter inside the router circuit 82. The safety standards used by the filter inside router circuit 82 can be defined such that an access is permitted only to the sites generally trusted to damage neither a computer nor data, or an access is permitted only to access-permitted sites stored in the security information storage unit 20. Therefore, although the sites to be accessed are greatly limited, security is ensured.

A third mode is a mode which not only supplies the power to the terminal 11 connected to the USB port 27, but enables data communications through the USB as in the WiFi connection, and is the mode which does not separate the management on security. Therefore, an access restriction is not provided if the site is connectable by the WiFi authentication. The third mode receives the security according to the third security mode.

### (Power feeding)

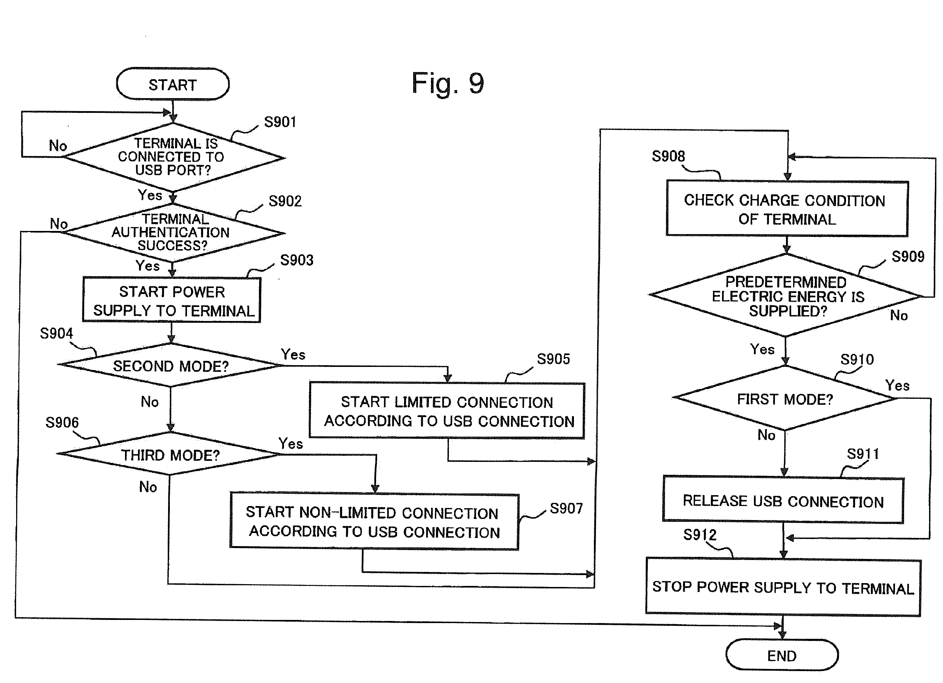

Hereinafter, along with the flowchart of Fig. 9, a feed operation of the radio transmission apparatus 80 according to the second exemplary embodiment will be described. Although it is assumed that the determination subject in the following operation is the control circuit 23, another component may be as the determination subject.

In Fig. 9, first, the control circuit 23 determines whether or not the terminal 11 is connected to the USB port 27 (step 901).

When the terminal 11 is connected to the USB port 27 (Yes in step 901), the control circuit 23 determines whether or not the authentication information of the terminal 11 matches the authentication information stored in the security information storage unit 20 (step 902). In other words, in the step 902, it is determined whether or not the terminal 11 has authenticated in the second security mode. When the terminal 11 is not connected to the USB port 27 (No in step 901), it waits until the terminal 11 is connected to the USB port 27.

When the authentication information of the terminal 11 matches the authentication information stored in the security information storage unit 20 (Yes in step 902), the power supply control circuit 25 outputs, to the power supply 26, an instruction to start the power supply to the terminal 11 (step 903).

When the authentication information of the terminal 11 does not match the authentication information stored in the security information storage unit 20 (No in step 902), this flow is terminated.

The control circuit 23 determines whether or not the USB-connection mode is the second mode (step 904).

When the USB-connection mode is the second mode (Yes in step 904), the router circuit 82 limits the terminal 11 only to a security site, and permits an access to the external network according to the USB connection (step 905).

When the USB-connection mode is not the second mode (No in step 904), the control circuit 23 determines whether or not the USB-connection mode is the third mode (step 906).

When the USB-connection mode is the third mode (Yes in step 906), the router circuit 82 permits the terminal 11 to access the external network according to the USB connection equivalent to the WiFi connection (step 907).

When the USB-connection mode is not the third mode (No in step 906), it is supposed that the USB-connection mode is the first mode.

The power supply control circuit 25 checks the charge condition of the terminal 11, and notifies the control device 23 of the charge condition of the terminal 11 (step 908).

The control circuit 23 determines whether or not the charged electric energy of the terminal 11 reaches predetermined electric energy (step 909). The predetermined electric energy herein may be set to an urgently-required amount of electric energy, for example, the electric energy which can make a telephone call for five minutes, the electric energy which can make a network connection for thirty minutes, the electric energy which can wait an incoming call or a reception of message for two hours. Note that the amount of power supply to the terminal 11 is not limited to the values described above.

When the charged electric energy of the terminal 11 reaches the predetermined electric energy in step 909 (Yes in step 909), processing in accordance with the following flows is performed depending on each USB-connection mode. When the charged electric energy of the terminal 11 does not reach the predetermined electric energy in step 909 (No in step 909), it returns to step 908.

When the USB-connection mode is not the first mode (No in step 910), in other words, when it is the second or third mode, the router circuit 82 releases the network connection according to the USB connection (step 911).

When the USB-connection mode is the first mode (Yes in step 910), the power control circuit 25 stops the power supply to the terminal 11 (step 912).

Similarly, when the network connection according to the USB connection is released in step 911, the power control circuit 25 stops the power supply to the terminal 11 (step 912).

The above is description of the operation of the radio transmission apparatus 80 according to the second exemplary embodiment. Note that the flow of the flowchart illustrated in Fig. 9 is an example of the operation of the radio transmission apparatus 80 according to the second exemplary embodiment, and it is assumed that such a change that processing order in the flowchart of Fig. 9 is changed or some procedures are slightly changed is within the scope of the present invention.

### (Modification)

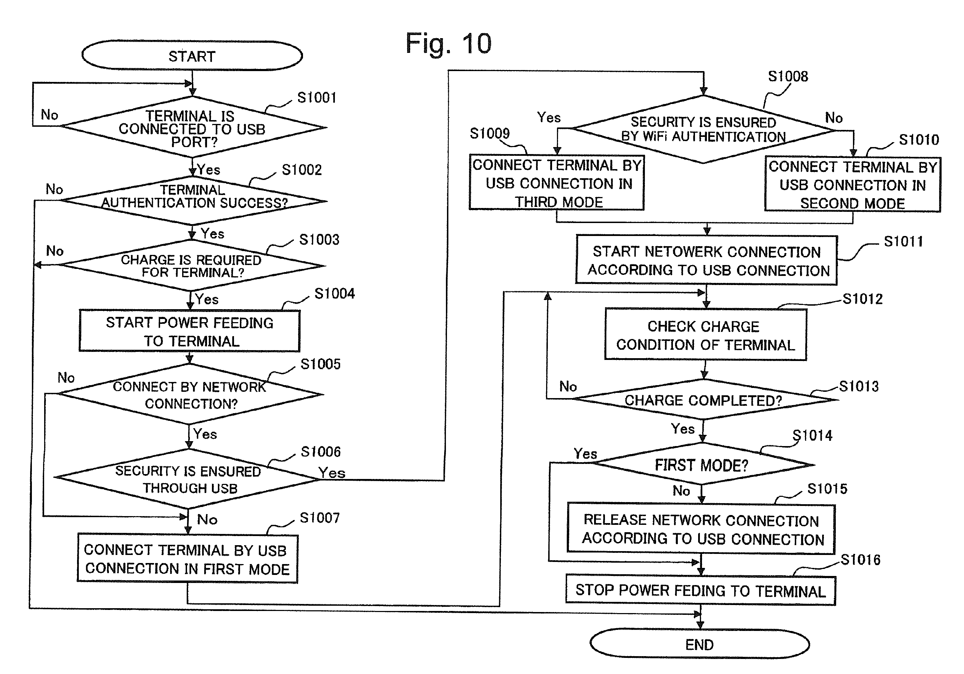

For the power feeding of the radio transmission apparatus 80 according to the second exemplary embodiment, a modification can be made as illustrated in Fig. 10.

In the above-described example, each component operates on the basis of the set USB-connection mode. The modification of Fig. 10 is an example in which, when the terminal 11 is connected to the USB port 27, the USB-connection mode switches automatically according to the condition of the terminal 11 and the authentication information. It is premised that the charge is performed through the USB port 27, but a connection with the external network through the USB port 27 is not established when the charge is not performed.

Fig. 10 is a flowchart illustrating an operation in the modification of the second exemplary embodiment.

In Fig. 10, first, the control circuit 23 determines whether or not the terminal 11 is connected to the USB port 27 (step 1001).

When the terminal 11 is connected to the USB port 27 (Yes in step 1001), the control circuit 23 determines whether or not the authentication information of the terminal 11 matches the authentication information stored in the security information storage unit 20 (step 1002). In other words, in the step 1002, it is determined whether or not the terminal 11 has authenticated in the second security mode. When the terminal 11 is not connected to the USB port 27 (No in step 301), it waits until the terminal 11 is connected to the USB port 27.

When the authentication information of the terminal 11 matches the authentication information stored in the security information storage unit 20 (Yes in step 1002), the control circuit 23 determines whether or not a charge is required for the terminal 11 through the power supply control circuit 25 (step 1003). When the authentication information of the terminal 11 does not match the authentication information stored in the security information storage unit 20 (No in step 1002), this flow is terminated.

When the charge is required to the terminal 11 (Yes in step 1003), power feeding to the terminal 11 is started (step 1004).

When the power feeding to the terminal 11 is not required (No in step 1003), the flow of Fig. 10 is terminated in the modification since it is premised that the connection with the external network through the USB port 27 is not established. Note that it is not limited to this manner when a connection to the external network through the USB port 27 is established regardless the charge to the terminal 11 is performed or not.

The control circuit 23 determines whether or not the terminal 11 is to be connected to the external network through the USB (step 1005). Note that the step 1005 can be skipped when automatically determining the connection with the external network only by the USB-connection mode.

When the network connection through the USB is not to be established (No in step 1005), a USB connection is established in the first mode (step 1007). In the first mode, although a charge is applied through the USB port 27, the network connection through the USB is not established. However, a connection with the external network through the radio LAN circuit 24 can be established.

When the network connection through the USB is to be established (Yes in step 1005), the control circuit 23 determines whether or not security can be ensured through the USB (step 1006).

When the security cannot be ensured through the USB (No in step 1006), the USB connection is established in the first mode (step 1007).

When the security can be ensured through the USB (Yes in step 1006), the control circuit 23 determines whether or not the security can be ensured by the WiFi authentication through the router circuit 82 (step 1008).

When the security can be ensured by the WiFi authentication (Yes in step 1008), the USB connection is established in the third mode (step 1009). In the third mode, a charge is applied through the USB port 27 and it is possible to connect to the external network as in the case where a connection is established by the radio LAN circuit 24. Note that in the third mode, high-speed communication through the USB is possible since it is not necessary to utilize a radio LAN environment.

When the security cannot be ensured by the WiFi authentication (No in step 1008), the USB connection is established in the second mode (step 1010). In the second mode, a charge is applied through the USB port 27 and a connection to the external network through the USB is established with a limitation that the access is limited to the secure sites in terms of the security by the router circuit 82.

When the second or third mode is selected, the network connection according to the USB connection is started (step 1011).

As described above, in the modification of Fig. 10, the USB connection mode is automatically selected in response to the security level of the terminal 11.

The power supply control circuit 25 checks the charge condition of the terminal 11, and notifies the control device 23 of the charge condition of the terminal 11 (step 1012). The control circuit 23 determines whether or not the charge to the terminal 11 is completed according to the notification from the power supply control circuit 25 (step 1013).

In Fig. 10, when the charge is completed (Yes in step 1013) and the USB connection is not in the first mode (No in step 1014), the control circuit 23 releases the network connection by the USB connection (step 1015). When the charge is completed (Yes in step 1013) and it is in the first mode (Yes in step 1014), the power feeding to the terminal 11 is stopped (step 1016).

When the charge is not completed (No in step 1013), the control circuit 23 continues the charge.

When the network connection according to the USB connection is released in step 1015 of Fig. 10, the power feeding to the terminal 11 is stopped (step 1016).

The above is the modification regarding the USB-connection mode of the second exemplary embodiment.

In this way, also in the second exemplary embodiment, function and the effect similar to the first exemplary embodiment can be obtained. According to the radio transmission system according to the second exemplary embodiment, the network connection through the USB port is available in addition to the network connection similar to the first exemplary embodiment. Therefore, it is possible to access to the network through the USB port while charging to the terminal. Further, a security more secure than a radio LAN environment can be achieved by connecting the radio transmission apparatus and the terminal by wire while receiving the WiFi authentication security.

### (Emergency mode)

In the second exemplary embodiment, an external network connection through the USB port 27 is made possible. For example, when a disaster or the like happens while operating the radio transmission apparatus 80 according to the second exemplary embodiment, it may be necessary to supply power urgently to a plurality of terminals 11 which are not authenticated by the WiFi authentication. In such a case, a problem may occur in terms of the security when permitting connections with the external network through the USB ports 27. Therefore, the terminals 11 can be connected to the USB ports 27 to be supplied the power in a following emergency mode.

In the emergency mode, in Fig. 8, when the radio transmission circuit 21 receives an emergency signal transmitted from a sending source, such as a management center, which has an authority to send the emergency signal, the control circuit 23 forces at least a communication link between the terminal 11 which is not authenticated by the WiFi authentication and the USB port 27 connected to the terminal 11 to disconnect. In this case, the terminal 11 authenticated by the WiFi authentication may be connected to the external network through the USB port 27 in the third security mode, but it is preferable to disconnect all the communication connections through the USB ports 27. However, it is assumed that the terminal 11 authenticated by the WiFi authentication can connect with the external network through the radio LAN circuit 24.

Next, the control circuit 23 instructs the power supply control circuit 25 to apply a feed control against the terminal 11 which is not authenticated by the WiFi authentication, and the power supply control circuit 25 starts the power feeding to the terminal 11 from the power supply 26. The power supply control circuit 25 monitors the charge condition of the terminal 11 which is not authenticated by the WiFi authentication, and stops the power feeding at the time when determining that more charge is not needed.

The above is an example of the emergency mode. Note that the above-described emergency mode is an example and various modifications can be made. For example, the emergency signal is sent by a user who has an authority to send the emergency signal, and the radio LAN circuit 24 may receive the signal. The emergency mode may be set by an administrator of the radio transmission apparatus 80 through the administrator LAN port 30. The communication link may be disconnected on the basis of an emergency response setting stored in the security information storage unit 20. Moreover, in the emergency mode, unless the electric energy is supplied by which the radio transmission apparatus 80 becomes difficult to operate, it is preferable that the power feeding can be applied to not only a mobile phone and a smartphone but various kinds of time-critical terminal devices.

According to the above-described emergency mode, it is possible to supply the power to arbitrary terminal devices in which the power is insufficient in an emergency. However, it is assumed that a connection to the USB port 27 is not permitted on the basis of determination by the control circuit 23 with respect to a terminal device which tries to gain unauthorized access to the radio transmission apparatus 80, or requires excessive power.

As above, the present invention has been described based on the above-mentioned exemplary embodiments, but the present invention is not limited only to the configurations and operations of the above-mentioned exemplary embodiments, and various possible modifications and corrections can be naturally included by a person skilled in the art within the scope of the present invention.

This application claims the priority based on Japanese patent application No. 2012-220998, filed on October 3, 2012, and its entire disclosure is incorporated herein.

### [Reference signs List]

- 10: Radio transmission apparatus
- 11: Terminal
- 12: Radio transmission apparatus on communication partner side
- 13: Cable
- 14: Wireless channel
- 15: Wireless channel
- 16: Antenna
- 17: Antenna
- 18: Antenna
- 20: Security information storage unit
- 21: Radio transmission circuit
- 22: Router circuit
- 23: Control circuit
- 24: Radio LAN circuit
- 25: Power supply control circuit
- 26: Power supply
- 27: USB port
- 28: Internal bus
- 29: Power supply bus
- 30: Administrator LAN port
- 41: Pole
- 51: Extended USB port
- 52: Extension cable
- 61: USB port
- 71: Terminal
- 72: Feed device
- 80: Radio transmission apparatus
- 82: Router circuit
- 110: Access point
- 111: CPU
- 112: ROM
- 113: RAM
- 114: USB host controller
- 115: Ethernet controller
- 116: RF device
- 117: Antenna
- 118: Feed control unit
- 142: USB port
- 152: LAN port
- 153: WAN port

## Claims

1. A radio transmission apparatus comprising:
a radio transmission circuit that performs radio communications with microwave;
a radio LAN circuit that performs radio LAN communications with a terminal having a radio communication function;
a router circuit that processes and transmits data exchanged between the radio transmission circuit and the radio LAN circuit;
a power feeding port that supplies power to the terminal;
a security information storage unit that stores security information on a connection of the terminal with the radio LAN circuit and the power feeding port; and
a control unit that controls the radio transmission circuit, the radio LAN circuit, the router circuit, and the power feeding port,
wherein the security information storage unit includes
a first security mode related to a standardized security authentication, and
a second security mode related to the connection between the terminal and the power feeding port, and
the control unit permits the radio LAN communication between the terminal and the radio LAN circuit by the first security mode, and supplies the power from the power feeding port to the terminal authenticated by the second security mode.

2. The radio transmission apparatus according to claim 1, wherein the first security mode is a security mode including a WiFi authentication.

3. The radio transmission apparatus according to claim 2, wherein the second security mode is a security mode which authenticates the terminal by an ID and a password by which a connection with the terminal is set between apparatuses.

4. The radio transmission apparatus according to claim 2, wherein the second security mode is a security mode which authenticates the terminal by a network authentication performed with a management center which manages the radio transmission apparatus.

5. The radio transmission apparatus according to claim 3 or 4, wherein
the security information storage unit includes
a third security mode related to an authentication for a network connection of the terminal through the power feeding port, and
a wired connection to an external network is established through the power feeding port with respect to the terminal authenticated by the first or third security mode.

6. The radio transmission apparatus according to claim 5, further comprising:
a LAN port that connects to an administration terminal for setting the first to third security information,
wherein the security information storage unit includes
a fourth security mode relating to an authentication for connecting the administration terminal to the LAN port, and
the administration terminal authenticated by the fourth security mode is connected to the LAN port.

7. The radio transmission apparatus according to any one of claims 1 to 6, wherein
the power feeding port includes a USB port,
the control unit controls a power feeding to supplies the power to the terminal connected to the USB port.

8. The radio transmission apparatus according to any one of claims 1 to 7, wherein
the power feeding port is provided at a position where a user of the terminal can operate the power feeding port.

9. The radio transmission apparatus according to any one of claims 1 to 8, wherein
when the radio transmission circuit or the radio LAN circuit receives an emergency signal,
the control unit disconnects a network connection through the power feeding port, and transits to an emergency mode in which the power is supplied to the terminal connected to the power feeding port.

10. A radio transmission system comprising:
the radio transmission apparatus according to any one of claims 1 to 9;
a radio transmission apparatus on communication partner side that performs a radio communication with the radio transmission apparatus with microwave; and
a terminal that is connected to the radio transmission apparatus by a radio LAN connection.
